# EUROPÄISCHE PATENTSCHRIFT

(11) **EP 3 420 252 B1**
(45) Veröffentlichungstag und Bekanntmachung des Hinweises auf die Patenterteilung: **13.05.2020**
(21) Anmeldenummer: 17706711.3
(22) Anmeldetag: 20.02.2017
(51) Int. Cl.: F16H 61/02, F16H 57/00

(54) **VERFAHREN ZUM BETREIBEN EINES AUTOMATIKGETRIEBES EINES KRAFTFAHRZEUGS UND AUTOMATIKGETRIEBE FÜR EIN KRAFTFAHRZEUG**
METHOD FOR OPERATING AN AUTOMATIC GEARBOX OF A MOTOR VEHICLE, AND AUTOMATIC GEARBOX FOR A MOTOR VEHICLE
PROCÉDÉ POUR FAIRE FONCTIONNER UNE BOÎTE DE VITESSES AUTOMATIQUE D'UN VÉHICULE À MOTEUR ET BOÎTE DE VITESSES AUTOMATIQUE POUR VÉHICULE À MOTEUR

(30) Priorität: 23.02.2016 DE 102016202732
(43) Veröffentlichungstag der Anmeldung: 02.01.2019
(73) Patentinhaber: Audi AG, 85045 Ingolstadt (DE)
(72) Erfinder: SCHMIDL, Lothar, 85092 Kösching (DE)
(86) Internationale Anmeldenummer: PCT/EP2017/053737
(87) Internationale Veröffentlichungsnummer: WO 2017/144391

(56) Entgegenhaltungen:
- EP-A1- 1 669 642
- EP-A2- 2 090 454
- DE-A1-102009 037 170
- JP-A- 2008 057 569
- JP-A- 2008 144 859

## Beschreibung

Die Erfindung betrifft ein Verfahren zum Betreiben eines Automatikgetriebes eines Kraftfahrzeugs gemäß dem Oberbegriff des Patentanspruchs 1. Die Erfindung betrifft auch ein Automatikgetriebe für ein Kraftfahrzeug gemäß dem Oberbegriff des Patentanspruchs 7.

Im Betrieb des Kraftfahrzeugs, beispielsweise während einer Fahrt mit dem Kraftfahrzeug, entstehen durch rotierende oder beweglich gelagerte Fahrzeugkomponenten im Antriebsstrang des Kraftfahrzeugs, wie zum Beispiel im Motor oder im Getriebe, Geräusche, welche auch in einem Innenraum des Kraftfahrzeugs wahrnehmbar sind.

Um den Komfort in Kraftfahrzeugen zu steigern, können unterschiedliche Systeme zur Eindämmung von Geräuschen im Kraftfahrzeug in das Kraftfahrzeug integriert werden.

Zum Beispiel schlägt die DE 10 2012 113 038 A1 eine Vorrichtung zur Geräuschoptimierung eines Geräuschs in einem Innenraum eines Fahrzeugs vor. Das Fahrzeug selbst weist einen Antrieb, wie beispielsweise einen Verbrennungsmotor oder einen Elektromotor, und einen dem Antrieb nachgeordneten Antriebsstrang auf. Zur Geräuschoptimierung werden der Antrieb und/oder der Antriebsstrang mittels Lagerelementen auf der Karosserie gelagert. Dabei weist zumindest ein Lagerelement einen Aktuator als Schwingungserzeuger auf, welcher Schwingungen erzeugt, deren Frequenzen dem Ordnungsspektrum eines Antriebsgeräuschs überlagert werden. Der Nachteil einer solchen Vorrichtung besteht darin, dass die Antriebsgeräusche weiterhin vorhanden sind und zu einer Schwingungsanregung weiterer Komponenten im Fahrzeug führen können, welche wiederum zu einer störenden Geräuschentwicklung beitragen können. Ferner sind zur Geräuschoptimierung zusätzliche Komponenten im Fahrzeug erforderlich, welche den Aufbau, in diesem Fall die Lagerung des Antriebs und/oder des Antriebsstrangs, aufwändiger gestalten. Zusätzliche Fahrzeugkomponenten nehmen Bauraum im Fahrzeug ein und erhöhen zudem das Gewicht des Fahrzeugs.

Nicht nur im Bereich des Antriebsstrangs des Kraftfahrzeugs kommt es im Betrieb des Kraftfahrzeugs zu Geräuschentwicklungen, sondern auch im Innenraum des Kraftfahrzeugs, wenn der Fahrer oder die Getriebeautomatik beispielsweise in einer Fahrsituation in ein bestimmtes Drehzahlspektrum, in dem es zu Resonanzen kommt, sich bewegt.

Um Geräuschen beim Gangwechsel entgegenzuwirken, schlägt die DE 10 2014 006 290 A1 ein Verfahren zum Betrieb einer Kupplungseinrichtung vor. Bei dem Verfahren wird die Kupplungseinrichtung durch eine Steuereinrichtung gesteuert. Dabei koppelt die Steuereinrichtung in einem ersten Kupplungszustand ausschließlich eine erste Gruppe von Rädern mit einer Antriebseinrichtung und in einem zweiten Kupplungszustand sowohl die erste als auch eine zweite Gruppe von Rädern mit der Antriebseinrichtung. Bei einer Erfüllung einer Umschaltbedingung im ersten Kupplungszustand wird die Kupplungseinrichtung durch die Steuereinrichtung während eines vorgegebenen Zeitintervalls in den zweiten Kupplungszustand überführt. Während zumindest eines Teils des Zeitintervalls wird ein Aktor durch die Steuereinrichtung durch ein Ansteuersignal zur Erzeugung eines Schallsignals angesteuert, das ein durch ein Umschalten des Kupplungszustandes erzeugtes Geräusch zumindest teilweise kompensiert. Die Erzeugung des Schallsignals zur Geräuschkompensation während eines Schaltvorganges ist besonders genau mit dem Schaltvorgang abzustimmen. Gerade bei einem häufigen Gangwechsel, wie beispielsweise beim Anfahren zur Beschleunigung des Kraftfahrzeugs, muss der Aktor besonders zuverlässig und schnell agieren, um einen Gegenschall zur Geräuschkompensation zu erzeugen. Das stellt die Ausgestaltung der Kupplungseinrichtung vor hohe Anforderung und erhöht damit die Komplexität der Kupplungseinrichtung.

Anstelle Geräusche zu kompensieren, können diese auch genutzt werden, wie beispielsweise bei einer Sprachsteuerung. Dazu beschreibt die DE 102 22 665 A1 ein Verfahren zur Konfiguration eines elektronischen Getriebes in einem Kraftfahrzeug. Einem Benutzer des Kraftfahrzeugs werden dazu auswählbare Schaltprogramme an einer Eingabeeinheit zur Konfiguration des elektronischen Getriebesteuergeräts angeboten. Der Benutzer wählt aus den angebotenen Schaltprogrammen individuelle Schaltprogramme aus. Anhand der benutzerindividuell ausgewählten Schaltprogramme wird das elektronische Getriebe durch Signalübertragung oder Spracheingabe Benutzerindividuell konfiguriert. Durch die Spracheingabe wird zwar die Bedienung für den Benutzer einfacher gestaltet und damit der Komfort für den Benutzer erhöht. Dennoch trägt eine zusätzliche Sprachsteuerung zur Geräuschkulisse im Kraftfahrzeug bei, wodurch sich beispielsweise weitere Fahrzeuginsassen gestört fühlen können.

In der JP 2008 057 569 A ist ein Verfahren zur Steuerung einer Schalldämmung für ein Fahrzeug beschrieben. In einem Verfahrensschritt wird der aktuelle Schalldruck des Mikrofons, welches den Schalldruck im Fahrzeug erfasst, ausgelesen. In einem weiteren Verfahrensschritt wird ermittelt, ob der Schalldruckpegel größer oder gleich dem Schalldruckschwellenwert ist. Ist der Geräuschschalldruck größer oder gleich dem Geräuschschalldruckgrenzwert, wird eine Lärmvermeidung zur Vermeidung von Geräuschen durchgeführt. Ist der Geräuschschalldruck kleiner als der Schalldruckgrenzwert, wird eine Kraftstoffeinsparung zur Verbesserung des Kraftstoffverbrauchs kontrolliert.

In der JP 2008 144 859 A ist eine Fahrzeugantriebsvorrichtung mit einem Motor und einem Getriebe beschrieben, wobei die Fahrzeugantriebsvorrichtung dazu eingerichtet ist, Geräusche, die durch das Fahren in dem Motor hervorgerufen werden, zu kontrollieren. Hierzu weist die Fahrzeugantriebsvorrichtung eine Steuerungsvorrichtung auf, welche dazu eingerichtet ist, ein Übersetzungsverhältnis des Getriebes zu ermitteln und zu verändern, wenn das Geräusch im Vergleich zu einem Hintergrundgeräusch ein Problem darstellt.

Daher ist es die Aufgabe der Erfindung, ein Verfahren zum Betreiben eines Automatikgetriebes und ein Automatikgetriebe bereitzustellen, welche den Komfort im Kraftfahrzeug erhöhen.

Diese Aufgabe wird gelöst durch ein Verfahren zum Betreiben eines Automatikgetriebes mit den Merkmalen des Patentanspruchs 1 und ein Automatikgetriebes mit den Merkmalen des Patentanspruchs 7. Vorteilhafte Ausgestaltungen der Erfindung finden sich in den abhängigen Ansprüchen.

Erfindungsgemäß wird diese Aufgabe gelöst durch ein Verfahren zum Betreiben eines Automatikgetriebes eines Kraftfahrzeugs. Dabei wird mittels einer Steuereinrichtung ein Schaltzustand des Automatikgetriebes eingestellt. Ferner wird mittels einer mit der Steuereinrichtung gekoppelten Erfassungseinrichtung ein akustisches Signal in einem Innenraum des Kraftfahrzeugs erfasst. Das Verfahren zeichnet sich dadurch aus, dass mittels der Steuereinrichtung der Schaltzustand von einem ersten Schaltzustand in einen zweiten Schaltzustand gewechselt wird, wenn das akustische Signal einen vorbestimmten Schwellwert überschreitet. Mit anderen Worten wird, wenn das erfasste akustische Signal den Schwellwert überschreitet, automatisch ein Gangwechsel, bevorzugt in einen naheliegenden Gang, durch die Steuereinrichtung initiiert. Dadurch ergibt sich der Vorteil, dass auf eine Ursache des akustischen Signals direkt, also aktiv, eingegangen wird und es gar nicht erst zu einer Geräuschentwicklung im Innenraum des Kraftfahrzeugs kommt.

Der Erfindung liegt die Erkenntnis zugrunde, dass es beispielsweise bei hohen Drehzahlen in Abhängigkeit von einer Geschwindigkeit des Kraftfahrzeugs zu einer Geräuschentwicklung im Bereich des Antriebsstranges des Kraftfahrzeugs kommen kann, welcher im Innenraum des Kraftfahrzeugs wahrnehmbar ist. Mit Innenraum ist bevorzugt ein Kabinenraum im Kraftfahrzeug gemeint, also der Raum in dem sich der Fahrer und/oder die Mitfahrer während einer Fahrt mit dem Kraftfahrzeug befinden. Ferner führen derartige Geräuschentwicklungen im Bereich des Antriebsstranges zu einer Schwingungsanregung weiterer Fahrzeugkomponenten, wie beispielsweise der Windschutzscheibe oder des Lenkrads im Innenraum des Kraftfahrzeugs. Derartige Schwingungsanregungen, welche auch als Resonanz bezeichnet werden, führen dazu, dass der Fahrer des Kraftwagens die Geräusche, welche durch den Antriebsstrang hervorgerufen werden, verstärkt wahrnimmt. Um solche Resonanzen zu verhindern, wird insbesondere automatisch, wenn das akustische Signal im Innenraum des Kraftfahrzeugs den Schwellwert überschreitet, ein Gangwechsel durch die Steuereinrichtung des Automatikgetriebes eingeleitet.

Ferner liegt der Erfindung die Erkenntnis zugrunde, dass bei einer Geräuschentwicklung im Innenraum des Kraftfahrzeugs, welche vom Antriebsstrang des Kraftfahrzeugs ausgeht, die Geräuschentwicklung ein Indiz dafür ist, dass ein suboptimaler Gang, also kein für eine aktuelle Drehzahl des Motors optimaler Gang, eingelegt ist. Ein Gangwechsel bei einer Geräuschentwicklung hat also auch den Vorteil, den Belastungsgrad des Kraftfahrzeugs zu reduzieren. Dadurch kann der Wirkungsgrad erhöht werden. Ferner reduziert ein rechtzeitiger Gangwechsel den Kraftstoffverbrauch des Kraftfahrzeugs.

Zur Umsetzung des Gangwechsels beziehungsweise des Wechsels von einem Schaltzustand - erster Schaltzustand - in einen anderen Schaltzustand - zweiter Schaltzustand - kann die Erfassungseinrichtung beim Erfassen des akustischen Signals das akustische Signal als ein elektrisches Erfassungssignal an die Steuereinrichtung übermitteln. Die Steuereinrichtung kann daraufhin dazu eingerichtet sein, das akustische Signal auszuwerten, beispielsweise, indem die Steuereinrichtung das empfangene akustische Signal mit einem der Steuereinrichtung hinterlegten Schwellwert vergleicht. Der Schwellwert kann in Form von Daten in einem Speicher der Steuereinrichtung ablegbar sein. Ist dann ein Wert des akustische Signal größer als der Wert des der Steuereinrichtung hinterlegten Schwellwertes, so kann die Steuereinrichtung einen Schaltzustand ändern, indem sie einen Wechsel von dem ersten Schaltzustand in den zweiten Schaltzustand durchführt. Mit anderen Worten kann die Steuereinrichtung dabei bevorzugt in einen naheliegenden Gang entweder hoch- oder zurückschalten. So kann die Steuereinrichtung beispielsweise einen Gangwechsel von einem ersten Gang in einen zweiten Gang oder von einem zweiten Gang in einen dritten Gang oder von einem dritten Gang in einen vierten Gang oder von einem vierten Gang in einen fünften Gang oder in einen noch höheren Gang, in Abhängigkeit von der Anzahl der Gänge des Automatikgetriebes hochschalten. Analog kann die Steuereinrichtung auch Gang für Gang zurückschalten. Mit einem Wechsel von dem ersten Schaltzustand in den zweiten Schaltzustand ist also ein Gangwechsel aus einem aktuell eingelegten Gang in einen von dem eingelegten Gang verschiedenen Gang gemeint.

Erfindungsgemäß überprüft bei einer Überschreitung des Schwellwertes die Steuereinrichtung das akustische Signal ferner mittels eines Plausibilitätskriteriums.

Eine Ausführungsform der Erfindung sieht vor, dass als akustisches Signal ein Frequenzwert eines Geräuschs in dem Innenraum und/oder ein Frequenzwert einer Vibration einer Kraftfahrzeugkomponente in dem Innenraum erfasst werden kann. Mit Geräusch ist hier bevorzugt ein Luftschall gemeint. Insbesondere wird durch die Erfassungseinrichtung als akustisches Signal ein Störgeräusch oder ein Störgeräuschmuster erfasst. Beispielsweise handelt es sich bei dem Störgeräusch oder dem Störgeräuschmuster um ein Brummen oder ein Summen oder ein Pfeifen oder ein Jaulen. Mit Frequenzwert ist bevorzugt ein Wert einer Frequenz, wie beispielsweise 50 Hz, gemeint.

Der Luftschall oder das Geräusch kann dazu führen, dass Fahrzeugkomponenten zu Schwingungen angeregt werden, welche durch ihre Schwingung wiederum ein weiteres akustisches Signal, also ein Geräusch, ausgeben können. Durch die Schwingungsanregung wird in den Fahrzeugkomponenten ein Körperschall induziert. Ein Körperschall ist ein Schall der sich im Festkörper, also beispielsweise in der Kraftfahrzeugkomponente, ausbreitet. Beispielsweise kann ein vom Antriebsstrang ausgehendes Geräusch ein Lenkrad oder eine Windschutzscheibe im Kraftfahrzeug zu Schwingungen anregen. Ein Fahrer, der das Kraftfahrzeug lenkt kann die Schwingungen des Lenkrads (Körperschall) beispielsweise als Vibration wahrnehmen. Die Vibration des Lenkrads kann, wie auch der Antriebsstrang, ein akustisches Signal verursachen. Das kann zu einer Resonanzwirkung führen und dadurch der Geräuschpegel im Innenraum des Kraftfahrzeugs erhöht oder verstärkt werden.

Zur Erfassung des Luftschalls und/oder des Körperschalls kann das Automatikgetriebe einen akustischen Sensor aufweisen. Beispielsweise kann der akustische Sensor ein Mikrofon aufweisen, welches einen Frequenzwert oder eine Frequenz des Geräuschs in dem Innenraum des Kraftfahrzeugs erfasst. Das Mikrofon ist bevorzugt dazu eingerichtet, das akustische Signal zu erfassen, in ein elektrisches Signal umzuwandeln und an die Steuereinrichtung weiterzuleiten. Alternativ oder zusätzlich kann der akustische Sensor auch einen Vibrationssensor oder Schwingungssensor zur Erfassung des Körperschalls oder der Vibration der Kraftfahrzeugkomponente aufweisen. Durch den akustischen Sensor kann auf besonders zuverlässige Art und Weise ein akustisches Signal erfasst werden.

Damit die Steuereinrichtung das erfasste akustische Signal mit dem Schwellwert vergleichen kann, kann es sich bei dem Schwellwert ebenfalls bevorzugt um einen Wert einer Frequenz handeln. Zur Festlegung des Schwellwertes, zum Beispiel einer Frequenz eines Geräuschs, kann an Testpersonen in Versuchen ermittelt werden, ab welcher Frequenz die Testpersonen ein Geräusch als störend empfinden.

In vorteilhafter Weise kann bei einer Überschreitung des vorbestimmten Schwellwertes die Steuereinrichtung ferner ein Ausgabesignal an eine Ausgabeeinrichtung übermittelt, welche nach einem Empfangen des Ausgabesignals eine Ausgabeinformation anzeigt. Bei der Ausgabeeinrichtung kann es sich beispielsweise um ein Kombiinstrument des Kraftfahrzeugs und/oder einen Touchscreen handeln. Der Touchscreen kann bevorzugt in einer Mittelkonsole des Kraftfahrzeugs angeordnet sein. Als Ausgabeinformation kann ein Symbol, wie beispielweise ein Pfeil, angezeigt werden. Die Ausgabeinformation kann dazu dienen, einem Fahrer des Kraftfahrzeugs einen Schaltaufforderung auszugeben, wenn das Automatikgetriebe zum Beispiel manuell betrieben wird.

Eine weitere Ausführungsform der Erfindung sieht vor, dass mittels einer mit der Steuereinrichtung gekoppelten weiteren Erfassungseinrichtung ein akustisches Umgebungssignal, insbesondere aus einer Umgebung des Kraftfahrzeugs, erfasst werden kann, wobei mittels der Steuereinrichtung bei einem Erfassen des akustischen Umgebungssignals das akustische Umgebungssignal herausgefiltert wird. Das erfasste akustische Umgebungssignal bleibt bevorzugt unberücksichtigt. Dadurch kann verhindert werden, dass Umgebungsgeräusche außerhalb des Kraftfahrzeugs einen Gangwechsel initiieren.

Als Plausibilitätskriterium kann bevorzugt ein Betriebsparameter des Kraftfahrzeugs, insbesondere ein aktueller Betriebsparameter, überprüft werden. Bei der Plausibilitätsprüfung kann beispielsweise überprüft werden, ob der Betriebsparameter innerhalb oder außerhalb eines vorbestimmten Referenzintervalls liegt, wobei ein Wechsel von dem ersten Schaltzustand in den zweiten Schaltzustand durch die Steuereinrichtung durchgeführt wird, wenn der zumindest ein Betriebsparameter außerhalb des vorbestimmten Referenzintervalls liegt. Das Referenzintervall oder die Referenzintervalle können in dem Speicher der Steuereinrichtung gespeichert sein. Ein Betriebsparameter kann beispielsweise eine Drehzahl des Motors sein. Als Referenzintervall kann dann beispielsweise ein für einen aktuell eingelegten Gang ein Drehzahlintervall bereitgestellt sein. Überschreitet das akustische Signal den Schwellwert, so kann die Steuereinrichtung gleichzeitig eine aktuelle Drehzahl des Motors überprüfen. Liegt die Drehzahl des Motors dann außerhalb des Drehzahlintervalls, welche für den eingelegten Gang zulässig ist, so kann die Steuereinrichtung einen Gangwechsel einleiten.

Zusätzlich oder alternativ kann als Plausibilitätskriterium ein Frequenzmuster überprüft werden. Das Frequenzmuster kann bevorzugt in dem Speicher der Steuereinrichtung hinterlegt sein. Um das Frequenzmuster, insbesondere in Form von Daten, bereitstellen zu können, kann das Frequenzmuster, mit dem das akustische Signal überprüft wird, einer Frequenzanalyse unterzogen werden. Bei der Frequenzanalyse kann zum Beispiel ein Frequenzwert oder Frequenzmuster eines Störgeräuschs ausgewertet werden. Bei der Frequenzanalyse kann beispielsweise ein Brummen als Frequenzmuster analysiert werden. Damit kann dann das Frequenzmuster nachgebildet werden und beispielsweise dem Speicher der Steuereinrichtung hinterlegt werden. Überschreitet das akustische Signal den Schwellwert, so kann die Steuereinrichtung das akustische Signal mit dem hinterlegten Frequenzmuster überprüfen. Liegt das akustische Signal in dem Frequenzmuster, so kann die Steuereinrichtung einen Gangwechsel einleiten.

Durch die Überprüfung mittels eines Plausibilitätskriteriums ergibt sich der Vorteil, dass ein falscher Gangwechsel vermieden wird und damit Fehler bei der Gangwahl reduziert werden.

Zu der Erfindung gehört auch ein Automatikgetriebe für ein Kraftfahrzeug. Das Automatikgetriebe umfasst eine Steuereinrichtung und eine Erfassungseinrichtung, welche mit der Steuereinrichtung gekoppelt ist. Mit "gekoppelt" ist hier gemeint, dass die Steuereinrichtung und die Erfassungseinrichtung elektrisch oder signaltechnisch miteinander verbunden sind. Die Steuereinrichtung ist dazu eingerichtet, einen Schaltzustand des Automatikgetriebes einzustellen. Die Erfassungseinrichtung des Automatikgetriebes ist dazu eingerichtet, ein akustisches Signal zu erfassen. Das Automatikgetriebe zeichnet sich dadurch aus, dass die Steuereinrichtung ferner dazu eingerichtet ist, einen Schaltzustand des Automatikgetriebes von einem ersten Schaltzustand in einen zweiten Schaltzustand zu wechseln, wenn das akustische Signal einen vorbestimmten Schwellwert überschreitet. Die Steuereinrichtung ist ferner dazu eingerichtet, bei einer Überschreitung des Schwellwertes das akustische Signal ferner mittels eines Plausibilitätskriteriums zu überprüfen.

Schließlich gehört zu der Erfindung noch ein Kraftfahrzeug mit einem Automatikgetriebe. Bei dem Automatikgetriebe kann es sich um das erfindungsgemäße Automatikgetriebe handeln.

Die für das erfindungsgemäße Verfahren und seine Ausgestaltungen genannten Merkmale, Merkmalskombinationen und deren Vorteile gelten in gleicher Weise für das erfindungsgemäße Automatikgetriebe und das erfindungsgemäße Kraftfahrzeug.

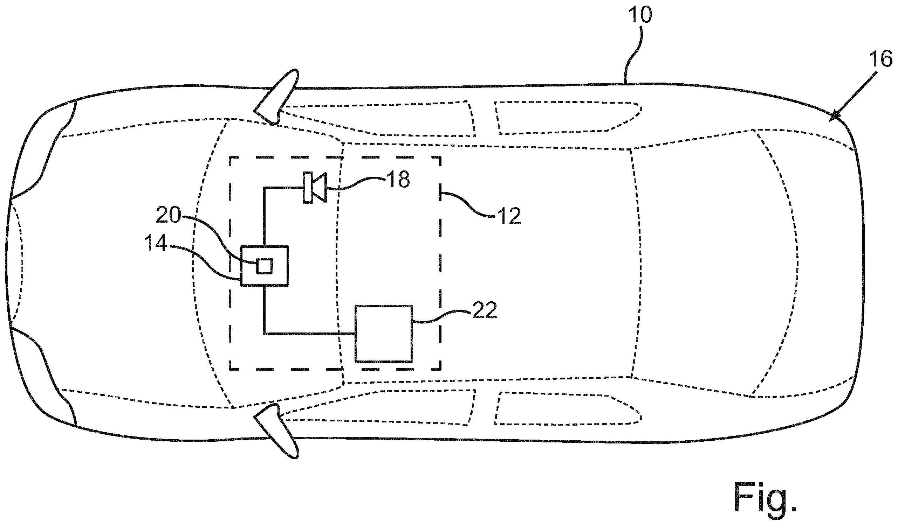

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10, bei dem es sich beispielsweise um einen Kraftwagen, insbesondere einen Personenkraftwagen, handeln kann. In der Figur ist das Kraftfahrzeug 10 in einer Draufsicht gezeigt.

Im Kraftfahrzeug 10 ist ein Automatikgetriebe 12 angeordnet. Das Automatikgetriebe 12 wird durch eine Steuereinrichtung 14 gesteuert. Das Automatikgetriebe 12 ist derart ausgelegt, dass die Gänge automatisch in Abhängigkeit von den Fahrbedingungen des Kraftfahrzeugs 10, wie zum Beispiel der Fahrgeschwindigkeit des Kraftfahrzeugs 10 und anderen Einflussgrößen, geschaltet werden, um gewünschte Fahrzeuglaufeigenschaften zu erreichen. Das Automatikgetriebe 12 kann aber auch manuell durch einen Fahrer betätigt werden, d.h. der Fahrer legt durch eine Betätigung eines Schalthebels des Automatikgetriebes 12 einen gewünschten Gang ein.

Während einer Fahrt des Kraftfahrzeugs 10 kann es bei bestimmten Geschwindigkeiten des Kraftfahrzeugs 10 oder bestimmten Drehzahlen zu Geräuschen in einem Innenraum 16 des Kraftfahrzeugs 10 kommen. Diese Geräusche können durch unterschiedliche Ursachen hervorgerufen werden. Beispielsweise kann es bei einem eingelegten Gang zu einer hohen Drehzahl des Motors kommen. Ein Fahrer des Kraftfahrzeugs 10 kann in diesem Fall zum Beispiel als Geräusch ein Brummen im Innenraum 16 des Kraftfahrzeugs 10 wahrnehmen. Auch unter anderen Betriebspunkten des Kraftfahrzeugs 10 kann es zu einer Geräuschentwicklung kommen. Wenn das Kraftfahrzeug 10 oder ein Motor des Kraftfahrzeugs 10 höhere Anstrengungen, wie beispielsweise bei einer Bergfahrt, aufwenden muss, so kann es vorkommen, dass rotierende oder beweglich gelagerte Fahrzeugkomponenten eines Antriebsstranges des Kraftfahrzeugs 10 Schwingungen auf weitere Kraftfahrzeugkomponenten im Innenraum 16 des Kraftfahrzeugs 10 übertragen, wie beispielsweise ein Lenkrad oder eine Windschutzscheibe. Gerät beispielsweise die Windschutzscheibe in Schwingung, so kann sie durch ihre Vibration zu einer Geräuschentwicklung im Innenraum 16 des Kraftfahrzeugs beitragen und das bereits vorhandene Geräusch verstärken.

Um die Geräusche im Innenraum 16 des Kraftfahrzeugs 10 zu reduzieren oder um sie gar nicht erst entstehen zu lassen, wird im Folgenden ein Verfahren zum Betreiben des Automatikgetriebes 12 genauer beschrieben.

Um eine Geräuschentwicklung zu verhindern, kann in dem Innenraum 16 des Kraftfahrzeugs 10 eine Erfassungseinrichtung 18 des Automatikgetriebes 12 angeordnet sein. Die Erfassungseinrichtung 18 ist mit der Steuereinrichtung 14 des Automatikgetriebes 12 gekoppelt. Die Erfassungseinrichtung 18 kann beispielsweise als akustischer Sensor ausgebildet sein. Der akustische Sensor umfasst zum Beispiel ein Mikrofon und/oder einen Schwingungssensor. Das Mikrofon kann dabei beispielsweise in einem Dachhimmel des Kraftfahrzeugs 10 angeordnet sein. Alternativ kann das Mikrofon auch Bestandteil eines Infotainmentsystems des Kraftfahrzeugs sein und in einer Mittelkonsole des Kraftfahrzeugs 10 angeordnet sein. Der Schwingungssensor kann beispielsweise an dem Lenkrad und/oder der Windschutzscheibe angeordnet sein.

Die Erfassungseinrichtung 18 ist dazu eingerichtet, ein akustisches Signal in dem Innenraum 16 des Kraftfahrzeugs 10 zu erfassen. Weist die Erfassungseinrichtung 18 zum Beispiel das Mikrofon auf, so kann das Mikrofon einen Luftschall, also ein Geräusch, im Innenraum 16 des Kraftfahrzeugs 10 erfassen. Weist die Erfassungseinrichtung 18 alternativ oder zusätzlich zu dem Mikrofon zum Beispiel den Schwingungssensor auf, so kann der Schwingungssensor einen Körperschall, also eine Vibration, erfassen. Ist der Schwingungssensor zum Beispiel an der Windschutzscheibe angeordnet, so kann der Schwingungssensor die Vibration der Windschutzscheibe erfassen. Nach einem Erfassen des akustischen Signals kann das Mikrofon das akustische Signal, zum Beispiel als ein elektrisches Erfassungssignal, an die Steuereinrichtung 14 übermitteln. Die Steuereinrichtung 14 wertet daraufhin das erfasste akustische Signal aus. Beispielsweise kann die Steuereinrichtung 14 das akustische Signal mit einem der Steuereinrichtung 14 hinterlegten Schwellwert vergleichen. Der Schwellwert kann in einem Speicher 20 der Steuereinrichtung 14 hinterlegt sein. Übersteigt das akustische Signal, also ein Frequenzwert des akustischen Signals, den Schwellwert, so ist die Steuereinrichtung 14 dazu eingerichtet, einen Schaltzustand des Automatikgetriebes 12 automatisch zu wechseln. Mit anderen Worten, ist der Frequenzwert des akustischen Signals größer als der Schwellwert, so ist die Steuereinrichtung 14 dazu eingerichtet, den Schaltzustand des Automatikgetriebes 12 automatisch zu wechseln. Die Steuereinrichtung 14 wechselt dann von einem ersten Schaltzustand in einen zweiten Schaltzustand. Unter den Schaltzustand fallen die Gänge des Automatikgetriebes 12. Wird durch die Steuereinrichtung 14 ein Schaltzustand des Automatikgetriebes 12 eingestellt, so wird ein aktuell eingelegter Gang in einen anderen Gang automatisch gewechselt.

Damit die Steuereinrichtung 14 nicht einfach bei jedem erfassten akustischen Signal, welches oberhalb eines vorbestimmten Schwellwertes liegt, zwischen den Schaltzuständen wechselt, kann es vorgesehen sein, dass die Steuereinrichtung ferner dazu ausgelegt ist, das erfasste akustische Signal mit einem Plausibilitätskriterium zu überprüfen.

Als Plausibilitätskriterium kann beispielsweise ein Betriebsparameter des Automatikgetriebes oder ein Frequenzmuster überprüft werden. Als Betriebsparameter kann beispielsweise eine aktuelle Motordrehzahl herangezogen werden. Die aktuelle Motordrehzahl kann bei der Plausibilitätsprüfung dann beispielsweise mit einem Betriebsparameterreferenzwert, welcher einem Schaltzustand zugeordnet ist, oder mit einem Referenzintervall überprüft werden. Der Betriebsparameterreferenzwert und/oder das Referenzintervall und/oder das Frequenzmuster können in dem Speicher der Steuervorrichtung 14 hinterlegt sein.

Bei der Plausibilitätsprüfung mit dem Betriebsparameter wird, wenn das akustische Signal den vorbestimmten Schwellwert überschreitet, beispielsweise von der Steuereinrichtung 14 gleichzeitig eine Motordrehzahl erfasst. Liegt die erfasste Motordrehzahl beispielsweise innerhalb des Referenzintervalls, welches für den eingelegten Schaltzustand zulässig ist, so wird durch die Steuereinrichtung 14 kein Gangwechsel initiiert. Das heißt, es erfolgt dann kein Wechsel des Schaltzustandes von einem ersten Schaltzustand in einen zweiten Schaltzustand. Ein Wechsel des Schaltzustandes - von dem ersten Schaltzustand in den zweiten Schaltzustand - würde durch die Steuereinrichtung erst dann initiiert werden, wenn das Plausibilitätskriterium erfüllt ist. Das wäre beispielsweise der Fall, wenn bei der Überschreitung des Schwellwertes ebenfalls die erfasste Motordrehzahl außerhalb des Referenzintervalls liegen würde.

Zur Plausibilitätsprüfung mit dem Frequenzmuster kann beispielsweise ein vorbestimmtes Frequenzmuster dem Speicher 20 der Steuereinrichtung 14 hinterlegt sein. Wird das akustische Signal erfasst, so vergleicht die Steuereinrichtung 14 das erfasste akustische Signal mit dem der Steuereinrichtung 14 hinterlegten Frequenzmuster. Das Frequenzmuster kann beispielsweise ein monotones Brummen darstellen. Fällt das erfasste akustische Signal nicht in das Frequenzmuster, so würde kein Wechsel des Schaltzustandes erfolgen.

Die Steuereinrichtung 14 des Automatikgetriebes 12 ist ferner mit einer Ausgabeeinrichtung 22 gekoppelt. Bei der Ausgabeeinrichtung 22 handelt es sich bevorzugt um ein Kombiinstrument. Wird das Automatikgetriebe 12 beispielsweise manuell betrieben, so kann es vorgesehen, dass dem Fahrer des Kraftfahrzeugs 10 ein Wechsel des Schaltzustandes angezeigt wird. Dazu kann die Steuereinrichtung 14, sobald sie erfasst, dass das akustische Signal den vorbestimmten Schwellwert überschreitet, ein Ausgabesignal an die Ausgabeeinrichtung 22 übermitteln, welche daraufhin ein Symbol, zum Beispiel einen Pfeil, anzeigt. Dieser Pfeil soll dem Fahrer symbolisieren, in welchen nächstliegenden Gang er schalten soll. Ist der Pfeil nach oben, also in Richtung eines Dachhimmels des Kraftfahrzeugs 10, gerichtet, symbolisiert das dem Fahrer, dass er einen Gang höher schalten soll. Ist der Pfeil hingegen nach unten, also in Richtung eines Bodens des Kraftfahrzeugs 10, gerichtet, symbolisiert das dem Fahrer, dass er einen Gang runter schalten soll.

Insgesamt ist somit ein Gangwechsel bei Geräuscherkennung beschrieben.

Beim Durchfahren beziehungsweise beim Halten von bestimmten Drehzahlen oder Geschwindigkeiten des Kraftfahrzeugs kann es zu Geräuschen im Innenraum des Fahrzeuges durch Anregungen kommen. Diese Anregungen werden meist durch Resonanzen in bestimmten Betriebspunkten des Kraftfahrzeugs erzeugt.

Der Fahrer wird durch Geräusche im Innenraum des Fahrzeuges belästigt. Dies ist insbesondere für ein Premiumfahrzeug nicht akzeptabel. Außerdem kann es zu Vibrationen unterschiedlicher Bauteile (z.B.: Lenkrad) kommen, die bei Berührung auch unangenehm sind.

Bereits verbaute Mikrofone oder nachzurüstende Mikrofone im Innenraum erkennen die störenden Geräusche oder Frequenzen und geben durch die Kommunikationsarchitektur im Kraftfahrzeug dem Automatikgetriebe den Befehl in einem naheliegenden Gang zu schalten, in dem die störende Frequenz in diesem Betriebsfall nicht auftritt. Dazu nehmen die Mikrofone die störende Frequenz auf und geben durch die Kommunikationsarchitektur des Fahrzeugs einen Schaltbefehl für das Getriebe.

Bei Handschaltgetrieben und/oder bei Automatikgetrieben in der manuellen Funktion kann eine Anzeige im Kombiinstrument zu einem Gangwechsel raten.

Dadurch wird der Fahrer nicht mehr durch störende Geräusche, wie beispielsweise ein Brummen und/oder ein Pfeifen und/oder durch Vibrationen belästigt.

## Patentansprüche

1. Verfahren zum Betreiben eines Automatikgetriebes (12) eines Kraftfahrzeugs (10) umfassend die Schritte:
- Einstellen eines Schaltzustandes des Automatikgetriebes (12) mittels einer Steuereinrichtung (14);
- Erfassen eines akustischen Signals in einem Innenraum (16) des Kraftfahrzeugs (10) mittels einer mit der Steuereinrichtung (14) gekoppelten Erfassungseinrichtung (18);
- Wechseln von einem ersten Schaltzustand in einen zweiten Schaltzustand mittels der Steuereinrichtung (14), wenn das akustischen Signal einen vorbestimmten Schwellwert überschreitet;
**dadurch gekennzeichnet, dass**
bei einer Überschreitung des Schwellwertes die Steuereinrichtung (14) das akustische Signal ferner mittels eines Plausibilitätskriteriums überprüft.

2. Verfahren nach Anspruch 1,
**dadurch gekennzeichnet, dass**
als akustisches Signal ein Frequenzwert eines Geräuschs in dem Innenraum (16) und/oder ein Frequenzwert einer Vibration einer Kraftfahrzeugkomponente in dem Innenraum (16) erfasst wird.

3. Verfahren nach Anspruch 1 oder 2,
**dadurch gekennzeichnet, dass**
bei einer Überschreitung des vorbestimmten Schwellwertes die Steuereinrichtung (14) ferner ein Ausgabesignal an eine Ausgabeeinrichtung (22) übermittelt, welche nach einem Empfangen des Ausgabesignals eine Ausgabeinformation anzeigt.

4. Verfahren nach einem der vorhergehenden Ansprüche,
**dadurch gekennzeichnet, dass**
mittels einer mit der Steuereinrichtung (14) gekoppelten weiteren Erfassungseinrichtung ein akustisches Umgebungssignal, insbesondere aus einer Umgebung des Kraftfahrzeugs (10), erfasst wird, wobei mittels der Steuereinrichtung (14) bei einem Erfassen des akustisches Umgebungssignals das akustisches Umgebungssignal herausgefiltert wird.

5. Verfahren nach einem der vorhergehenden Ansprüche,
**dadurch gekennzeichnet, dass**
als Plausibilitätskriterium ein Betriebsparameter des Kraftfahrzeugs (10) überprüft wird.

6. Verfahren nach einem der vorhergehenden Ansprüche,
**dadurch gekennzeichnet, dass**
als Plausibilitätskriterium ein Frequenzmuster überprüft wird.

7. Automatikgetriebe (12) für ein Kraftfahrzeug (10) umfassend:
- eine Steuereinrichtung (14), welche dazu eingerichtet ist, einen Schaltzustand des Automatikgetriebes (12) einzustellen;
- eine mit der Steuereinrichtung (14) gekoppelte Erfassungseinrichtung (18), welche dazu eingerichtet ist, ein akustisches Signal zu erfassen; wobei
- die Steuereinrichtung (14) ferner dazu eingerichtet ist, den Schaltzustand von einem ersten Schaltzustand in einen zweiten Schaltzustand zu wechseln, wenn das akustische Signal einen vorbestimmten Schwellwert überschreitet;
**dadurch gekennzeichnet, dass**
die Steuereinrichtung (14) ferner dazu eingerichtet ist, bei einer Überschreitung des Schwellwertes das akustische Signal ferner mittels eines Plausibilitätskriteriums zu überprüfen.

8. Automatikgetriebe (12) nach Anspruch 7,
**dadurch gekennzeichnet, dass**
die Erfassungseinrichtung (18) als akustischer Sensor, insbesondere als Mikrofon und/oder als Schwingungssensor, ausgebildet ist.

9. Kraftfahrzeug (10) mit einem Automatikgetriebe (12) nach Anspruch 7 oder 8.

## Claims

1. Method for operating an automatic transmission (12) of a motor vehicle (10), comprising the steps:
- setting a shifting status of the automatic transmission (12) by means of a control device (14);
- detecting an acoustic signal in an interior space (16) of the motor vehicle (10) by means of a detection device (18) coupled to the control device (14);
- switching from a first shifting status into a second shifting status by means of the control device (14), if the acoustic signal exceeds a predetermined threshold value;
**characterised in that**
when the threshold value is exceeded, the control device (14) further checks the acoustic signal by means of a plausibility criterion.

2. Method according to claim 1,
**characterised in that**
a frequency value of a noise in the interior space (16) and/or a frequency value of a vibration of a vehicle component in the interior space (16) is detected as acoustic signal.

3. Method according to claim 1 or 2,
**characterised in that**
when the predetermined threshold value is exceeded, the control device (14) further transmits an output signal to an output device (22), which displays a piece of output information after detecting the output signal.

4. Method according to any of the preceding claims,
**characterised in that**
an acoustic environment signal, in particular from an environment of the motor vehicle (10), is detected by means of a further detection device coupled with the control device (14), wherein when the acoustic environment signal is detected, the acoustic environment signal is filtered out by means of the control device (14).

5. Method according to any of the preceding claims,
**characterised in that**
an operating parameter of the motor vehicle (10) is checked as plausibility criterion.

6. Method according to any of the preceding claims,
**characterised in that**
a frequency pattern is checked as plausibility criterion.

7. Automatic transmission (12) for a motor vehicle (10) comprising:
- a control device (14), which is configured to set a shifting status of the automatic transmission (12);
- a detection device (18) coupled with the control device (14), which is configured to detect an acoustic signal; wherein
- the control device (14) is also configured to change the shifting status from a first shifting status into a second shifting status, if the acoustic signal exceeds a predetermined threshold value;
**characterised in that**
the control device (14) is further configured, in the event of an exceeding of the threshold value, to further check the acoustic signal by means of a plausibility criterion.

8. Automatic transmission (12) according to claim 7,
**characterised in that**
the detection device (18) is designed as an acoustic sensor, in particular as a microphone and/or as a vibration sensor.

9. Motor vehicle (10) having an automatic transmission (12) according to claims 7 or 8.

## Revendications

1. Procédé pour faire fonctionner une transmission automatique (12) d'un véhicule à moteur (10) comprenant les étapes consistant à :
- régler un état de commutation de la transmission automatique (12) au moyen d'un dispositif de commande (14) ;
- enregistrer un signal acoustique dans un espace intérieur (16) du véhicule à moteur (10) au moyen d'un dispositif de détection (18) couplé avec le dispositif de commande (14) ;
- alterner entre un premier état de commutation et un second état de commutation au moyen du dispositif de commande (14), lorsque le signal acoustique dépasse une valeur seuil prédéterminée ;
**caractérisé en ce qu'**
en cas de dépassement de la valeur seuil, le dispositif de commande (14) vérifie en outre le signal acoustique au moyen d'un critère de plausibilité.

2. Procédé selon la revendication 1,
**caractérisé en ce qu'**
une valeur de fréquence d'un bruit dans l'espace intérieur (16) et/ou une valeur de fréquence d'une vibration d'un composant du véhicule à moteur dans l'espace intérieur (16) est comprise en tant que signal acoustique.

3. Procédé selon la revendication 1 ou 2,
**caractérisé en ce qu'**
en cas de dépassement de la valeur seuil, le dispositif de commande (14) transmet en outre un signal de sortie à un dispositif de sortie (22), lequel affiche une information de sortie après réception d'un signal de sortie.

4. Procédé selon l'une quelconque des revendications précédentes,
**caractérisé en ce qu'**
au moyen d'un autre dispositif de détection couplé avec le dispositif de commande (14), un signal de voisinage acoustique est enregistré, en particulier en provenance d'un voisinage du véhicule à moteur (10), dans lequel le signal de voisinage acoustique est filtré au moyen du dispositif de commande (14) lors d'un enregistrement du signal de voisinage acoustique.

5. Procédé selon l'une quelconque des revendications précédentes,
**caractérisé en ce qu'**
un paramètre de fonctionnement du véhicule à moteur (10) est vérifié en tant que critère de plausibilité.

6. Procédé selon l'une quelconque des revendications précédentes,
**caractérisé en ce qu'**
un modèle de fréquence est vérifié en tant que critère de plausibilité.

7. Transmission automatique (12) pour un véhicule à moteur (10) comprenant :
- un dispositif de commande (14), lequel est configuré pour régler un état de commutation de la transmission automatique (12) ;
- un dispositif de détection (18) couplé avec le dispositif de commande (14), lequel est configuré pour enregistrer un signal acoustique ; dans laquelle
- le dispositif de commande (14) est configuré en outre pour alterner l'état de commutation entre un premier état de commutation et un second état de commutation, lorsque le signal acoustique dépasse une valeur seuil prédéterminée ;
**caractérisée en ce que**
le dispositif de commande (14) est configuré en outre pour vérifier en outre le signal acoustique en cas de dépassement d'une valeur seuil au moyen d'un critère de plausibilité.

8. Transmission automatique (12) selon la revendication 7,
**caractérisée en ce que**
le dispositif de détection (18) est réalisé en tant que capteur acoustique, en particulier en tant que microphone et/ou en tant que capteur d'oscillations.

9. Véhicule à moteur (10) avec une transmission automatique (12) selon la revendication 7 ou 8.
